# EUROPÄISCHE PATENTSCHRIFT

(11) **EP 2 990 553 B1**
(45) Veröffentlichungstag und Bekanntmachung des Hinweises auf die Patenterteilung: **22.01.2020**
(21) Anmeldenummer: 14182235.3
(22) Anmeldetag: 26.08.2014
(51) Int. Cl.: E04B 1/68, E06B 1/62

(54) **VERFAHREN ZUR HERSTELLUNG EINER DICHTBANDROLLE**
METHOD FOR MANUFACTURING A SEALING TAPE ROLL
PROCÉDÉ DE FABRICATION D'UN ROULEAU DE RUBAN ÉTANCHE

(43) Veröffentlichungstag der Anmeldung: 02.03.2016
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 2 620 565
- DE-U1-202012 101 990
- FR-A1- 2 309 768
- US-A- 4 486 990
- US-A1- 2009 246 498
- US-A1- 2013 154 201

## Beschreibung

Die vorliegende Erfindung betrifft ein Verfahren zur Herstellung einer Dichtbandrolle.

Von Dichtbandrollen abgewickelte Dichtbänder werden üblicherweise zum Abdichten von Fugen beispielsweise zwischen einem Rahmenprofil eines Fensters oder einer Tür und einer Gebäudewand verwendet, um die Fugen gegen Luftzug und Schlagregen abzudichten. Zusätzlich vorgesehene Folien an einer Seitenfläche des Dichtbands erhöhen zudem die Dampfundurchlässigkeit desselben, siehe z.B. EP 0 072 955 A1 oder EP 1 936 246 A1. Allerdings weisen Folien, die außen an das Dichtband angebracht sind, den Nachteil auf, dass sie beim Transport oder Einbau des Dichtbands beschädigt werden können.

Aus DE 196 41 415 A1 ist eine Dichtbandrolle bekannt, die mindestens eine in radialer Richtung verlaufende Sperrschicht aufweist, die zwischen zwei Schichten des Schaumstoffs und somit im Inneren der Dichtbandrolle angeordnet ist. Dadurch ist die Sperrschicht besser vor Beschädigungen geschützt. Die Sperrschicht besteht dabei aus Klebstoff oder aus einem Laminierungsmaterial. Zur Herstellung eines derartigen Dichtbandes werden großflächige Sperrschichten auf Platten eines offenporigen Schaummaterials durch Laminieren oder Verkleben ausgebildet. Mehrere Lagen an Schaumstoffplatten und Sperrschichten bilden so Laminatblöcke. Diese Laminatblöcke werden orthogonal zu den großflächigen Sperrschichten zu Tafeln getrennt. Die Tafeln werden anschließend derart zu breiten Rollen aufgewickelt, dass die Sperrschichten und das Schaumstoffmaterial auf dem Umfang der Rollen in axialer Richtung aufgereiht sind. Eine derartige breite Rolle wird dann zwischen den einzelnen Sperrschichten in Scheiben zu mehreren Dichtbandrollen getrennt. Dieses Verfahren verlangt viele aufwändige Arbeitsschritte und die Länge der hergestellten Dichtbänder ist durch die Größenbeschränkung von maschinell noch verarbeitbaren Laminatblöcken eingeschränkt.

Weiterhin offenbart EP 2 620 565 A1 ein Verfahren zur Herstellung einer Dichtbandrolle, bei dem ein Schnitt in einer Schaumstoffbahn zur Bildung von zwei miteinander verbundenen Schaumstoffstreifen eingebracht wird, dann die beiden Schaumstoffstreifen auseinandergeklappt werden, dann ein gemeinsamer Folienstreifen auf die aufgeklappten Schaumstoffstreifen laminiert wird, und schließlich die mit der Folie versehenen Schaumstoffstreifen wieder in die Ausgangsposition rückgestellt werden, so dass die Folie in V-Form im Zwischenraum zwischen den Schaumstoffstreifen angeordnet ist.

Der vorliegenden Erfindung liegt die Aufgabe zugrunde, ein Verfahren zur Herstellung einer Dichtbandrolle mit einer innenliegenden, radial verlaufenden Sperrschicht anzugeben, das einfach und zuverlässig ist und mit dem auch Dichtbandrollen großer Längen erzeugt werden können.

Diese Aufgabe wird durch die Merkmale des Anspruchs 1 bzw. des Anspruchs 6 gelöst.

Erfindungsgemäß umfasst das Verfahren zur Herstellung einer Dichtbandrolle aus weichem, komprimiertem Schaumstoff mit mindestens einer in radialer Richtung verlaufenden Sperrschicht, die axial zwischen zwei Schichten aus Schaumstoff angeordnet ist, folgende Schritte in der angegebenen Reihenfolge:
- Bereitstellen mindestens eines ersten Schaumstoffstreifens aus weichem Schaumstoff, der an mindestens einer seiner Seitenflanken mit mindestens einem Folienstreifen, einem Klebebandstreifen und/oder einem klebstoffartigen flüssigen Medium versehen ist,
- Bereitstellen mindestens eines zweiten Schaumstoffstreifens aus weichem Schaumstoff,
- Zusammenführen und Verbinden des mindestens einen ersten Schaumstoffstreifens mit dem mindestens einen zweiten Schaumstoffstreifen derart, dass eine Schaumstoff-Sperrschicht-Bahn entsteht, bei der mindestens eine aus dem Folienstreifen, dem Klebebandstreifen und/oder dem klebstoffartigen flüssigen Medium hervorgegangene Sperrschicht zwischen aneinandergrenzenden Schaumstoffstreifen angeordnet ist; und
- (i) Aufwickeln der Schaumstoff-Sperrschicht-Bahn zu einer Dichtbandrolle, oder
- (ii) Aufwickeln der Schaumstoff-Sperrschicht-Bahn zu einer Zwischenrolle und Durchtrennen der Zwischenrolle an einer oder an mehreren Stellen in axialer Richtung, um eine Mehrzahl von Dichtbandrollen zu erzeugen, die weniger breit sind als die Zwischenrolle, oder
- (iii) Einbringen mindestens eines Schnitts in die Schaumstoff-Sperrschicht-Bahn in einer Längsrichtung der Schaumstoff-Sperrschicht-Bahn zur Bildung von Schaumstoff-Sperrschicht-Streifen und Aufwickeln der Schaumstoff-Sperrschicht-Streifen zu einzelnen Dichtbandrollen.

Auf diese Weise können Dichtbandrollen aus weichem, komprimiertem Schaumstoff mit mindestens einer in radialer Richtung verlaufenden Sperrschicht, die axial zwischen zwei Schichten des Schaumstoffs angeordnet ist, besonders wirtschaftlich und auch in großen Längen hergestellt werden. Zudem ist die Sperrschicht durch die Aufnahme zwischen zwei Schaumstoffstreifen vor äußerer Beschädigung während des Transports und der Montage des Dichtbands geschützt. Zudem sind die Eigenschaften des Dichtbands besonders variabel gestaltbar, da Schaumstoffstreifen beliebiger Gestaltung miteinander kombiniert werden können.

Vorzugsweise umfasst das Bereitstellen des mindestens einen ersten Schaumstoffstreifens folgende Schritte:
- Bereitstellen einer ersten Schaumstoffbahn aus einem weichen Schaumstoff;
- Aufbringen einer Folienbahn, einer Klebebandbahn und/oder einer Schicht aus einem klebstoffartigen flüssigen Medium auf mindestens die Oberseite oder die Unterseite der Schaumstoffbahn zur Erzeugung einer kaschierten Schaumstoffbahn; und
- Einbringen mindestens eines durchgängigen Schnitts in die kaschierte Schaumstoffbahn in einer Längsrichtung der kaschierten Schaumstoffbahn zur Erzeugung einer Mehrzahl von ersten Schaumstoffstreifen, die jeweils an mindestens einer ihrer Seitenflanken mit mindestens einem Folienstreifen, einem Klebebandstreifen und/oder einem klebstoffartigen flüssigen Medium versehen sind.
Auf diese Weise können mehrere erste Schaumstoffstreifen gleichzeitig und automatisiert hergestellt werden.

Das Bereitstellen der ersten Schaumstoffbahn weist vorzugsweise folgende Schritte auf:
- Bereitstellen einer ersten Rolle mit der aufgewickelten ersten Schaumstoffbahn; und
- Abwickeln der ersten Schaumstoffbahn von der ersten Rolle.
Auf diese Weise ist die erste Schaumstoffbahn vor der Behandlung einfach und platzsparend aufbewahrt und lässt sich leicht verarbeiten.

Vorzugsweise ist die bereitgestellte erste Schaumstoffbahn nicht imprägniert, und das Verfahren weist folgende Schritte nach dem Schritt des Zusammenführens und Verbindens der Schaumstoffstreifen auf:
- Tränken der Schaumstoff-Sperrschicht-Bahn mit einem Imprägnat; und
- Trocknen der imprägnierten Schaumstoff-Sperrschicht-Bahn.

Die Sperrschicht haftet in diesem Fall besonders sicher an dem Schaumstoff.

Das Einbringen des mindestens einen durchgängigen Schnitts in die kaschierte Schaumstoffbahn wird vorzugsweise mittels mindestens eines Messers oder mindestens einer Säge durchgeführt. Diese eignen sich besonders gut zum Durchtrennen der Schaumstoffbahn.

In einer alternativen Variante umfasst das erfindungsgemäße Verfahren zur Herstellung einer Dichtbandrolle aus weichem, komprimiertem Schaumstoff mit mindestens einer in radialer Richtung verlaufenden Sperrschicht, die axial zwischen zwei Schichten aus Schaumstoff angeordnet ist, folgende Schritte in der angegebenen Reihenfolge:
- Bereitstellen von mindestens zwei Schaumstoffstreifen aus weichem Schaumstoff,
- Zusammenführen der mindestens zwei Schaumstoffstreifen und gleichzeitig Einbringen eines Folienstreifens, eines Klebebandstreifens und/oder eines klebstoffartigen flüssigen Mediums in jeden Zwischenraum zwischen zwei benachbarten Schaumstoffstreifen;
- Verbinden aller Schaumstoffstreifen derart, dass eine Schaumstoff-Sperrschicht-Bahn entsteht, bei der mindestens eine aus dem Folienstreifen, dem Klebebandstreifen und/oder dem klebstoffartigen flüssigen Medium hervorgegangene Sperrschicht zwischen aneinandergrenzenden Schaumstoffstreifen angeordnet ist; und
- (i) Aufwickeln der Schaumstoff-Sperrschicht-Bahn zu einer Dichtbandrolle, oder
- (ii) Aufwickeln der Schaumstoff-Sperrschicht-Bahn zu einer Zwischenrolle und Durchtrennen der Zwischenrolle an einer oder an mehreren Stellen in axialer Richtung, um eine Mehrzahl von Dichtbandrollen zu erzeugen, die weniger breit sind als die Zwischenrolle, oder
- (iii) Einbringen mindestens eines Schnitts in die Schaumstoff-Sperrschicht-Bahn in einer Längsrichtung der Schaumstoff-Sperrschicht-Bahn zur Bildung von Schaumstoff-Sperrschicht-Streifen und Aufwickeln der Schaumstoff-Sperrschicht-Streifen zu einzelnen Dichtbandrollen.

Auch auf diese Weise können Dichtbandrollen aus weichem, komprimiertem Schaumstoff mit mindestens einer in radialer Richtung verlaufenden Sperrschicht, die axial zwischen zwei Schichten des Schaumstoffs angeordnet ist, besonders wirtschaftlich und auch in großen Längen hergestellt werden. Zudem ist die Sperrschicht durch die Aufnahme zwischen zwei Schaumstoffstreifen vor äußerer Beschädigung während des Transports und der Montage des Dichtbands geschützt. Zudem sind die Eigenschaften des Dichtbands besonders variabel gestaltbar, da Schaumstoffstreifen beliebiger Gestaltung miteinander kombiniert werden können.

Vorzugsweise umfasst das Bereitstellen der mindestens zwei Schaumstoffstreifen folgende Schritte:
- Bereitstellen einer Rolle mit einer aufgewickelten Schaumstoffbahn;
- Abwickeln der Schaumstoffbahn von der Rolle; und
- Einbringen mindestens eines durchgängigen Schnitts in die Schaumstoffbahn in einer Längsrichtung der Schaumstoffbahn zur Erzeugung einer Mehrzahl von Schaumstoffstreifen.
Auf diese Weise können mehrere Schaumstoffstreifen gleichzeitig und automatisiert hergestellt werden.

Das Einbringen jedes Folienstreifens oder Klebebandstreifens in jeden Zwischenraum zwischen zwei benachbarten Schaumstoffstreifen erfolgt vorzugsweise durch Abwickeln des Folienstreifens oder Klebebandstreifens von einer Spule oder Rolle und geeignete Führung des Folienstreifens oder Klebebandstreifens. Dadurch kann jeder Folienstreifen oder Klebebandstreifen in beliebiger Länge oberhalb, unterhalb oder seitlich der Schaumstoffstreifen bereitgestellt werden und dennoch gezielt in Förderrichtung der Schaumstoffstreifen in den Zwischenraum eingebracht werden.

Vorzugsweise erfolgt das Einbringen des flüssigen klebstoffartigen Mediums in jeden Zwischenraum mittels einer Düse.

Das Verbinden der Schaumstoffstreifen weist vorzugsweise den Schritt auf, jeden Folienstreifen mit einem oder beiden an den Folienstreifen angrenzenden Schaumstoffstreifen durch Laminierung zu verbinden.

Das Verbinden aller Schaumstoffstreifen weist vorzugsweise den Schritt auf, das flüssige klebstoffartige Medium zu verfestigen.

Das Verbinden aller Schaumstoffstreifen umfasst vorzugsweise den Schritt der Wärmeaufbringung.

Das Verbinden aller Schaumstoffstreifen umfasst vorzugsweise den Schritt, die Schaumstoffstreifen aneinander zu drücken.

Bei Alternative (ii) wird das Durchtrennen der Zwischenrolle vorzugsweise mittels Sägen durchgeführt.

Vorzugsweise wird eine beidseitig klebende Klebeschicht auf alle Schaumstoffstreifen der Schaumstoff-Sperrschicht-Bahn auf einer Fläche, die senkrecht zu der mindestens einen Sperrschicht verläuft, aufgebracht, wobei die Klebeschicht auf ihrer den Schaumstoffstreifen abgewandten Seite mit einer Abziehfolie kaschiert ist. Somit kann der doppelseitige Klebestreifen unmittelbar zur Anbringung des Dichtbands an einem Rahmenprofil des Fensters verwendet werden.

Weitere Merkmale und Vorteile der vorliegenden Erfindung ergeben sich aus der nachfolgenden Beschreibung unter Bezugnahme auf die Zeichnungen.
- Fig. 1: zeigt beispielhaft den Ablauf der Herstellung von mit einem Folienstreifen versehenen ersten Schaumstoffstreifen als optionalen Teil einer ersten Ausführungsform des erfindungsgemäßen Verfahrens zur Herstellung einer Dichtbandrolle in schematischer Perspektivansicht;
- Fig. 2: zeigt beispielhaft den Ablauf der Herstellung von zweiten Schaumstoffstreifen als optionalen Teil der ersten Ausführungsform des erfindungsgemäßen Verfahrens in schematischer Perspektivansicht;
- Fig. 3: zeigt schematisch wesentliche Schritte bei der ersten Ausführungsform des erfindungsgemäßen Verfahrens zur Herstellung einer Dichtbandrolle in schematischer Perspektivansicht;
- Fig. 4: zeigt beispielhaft den Ablauf nach einem zweiten Ausführungsbeispiel des erfindungsgemäßen Verfahrens in einem ersten Abschnitt einer für das Verfahren geeigneten Vorrichtung in schematischer Perspektivansicht;
- Fig. 5: zeigt eine schematische Detailansicht der Verbindungseinheit aus Fig. 3 oder 4;
- Fig. 6: zeigt den Ablauf nach dem zweiten Ausführungsbeispiel des erfindungsgemäßen Verfahrens aus Fig. 4 in einem zweiten Abschnitt einer für das Verfahren geeigneten Vorrichtung in schematischer Perspektivansicht;
- Fig. 7: zeigt den Schritt des Durchtrennens der Zwischenrolle gemäß einer Alternative des erfindungsgemäßen Verfahrens in schematischer Perspektivansicht;
- Fig. 8: zeigt die finalen Schritte eines alternativen Ausführungsbeispiels des erfindungsgemäßen Verfahrens in schematischer Perspektivansicht;
- Fig. 9: zeigt eine Einbausituation einer Ausführungsform des erfindungsgemäß hergestellten Dichtbands in einer schematischen Querschnittsansicht;
- Fig. 10: zeigt eine Einbausituation einer weiteren Ausführungsform des erfindungsgemäß hergestellten Dichtbands in einer schematischen Querschnittsansicht; und
- Fig. 11: zeigt eine Einbausituation einer weiteren Ausführungsform des erfindungsgemäß hergestellten Dichtbands in einer schematischen Querschnittsansicht.

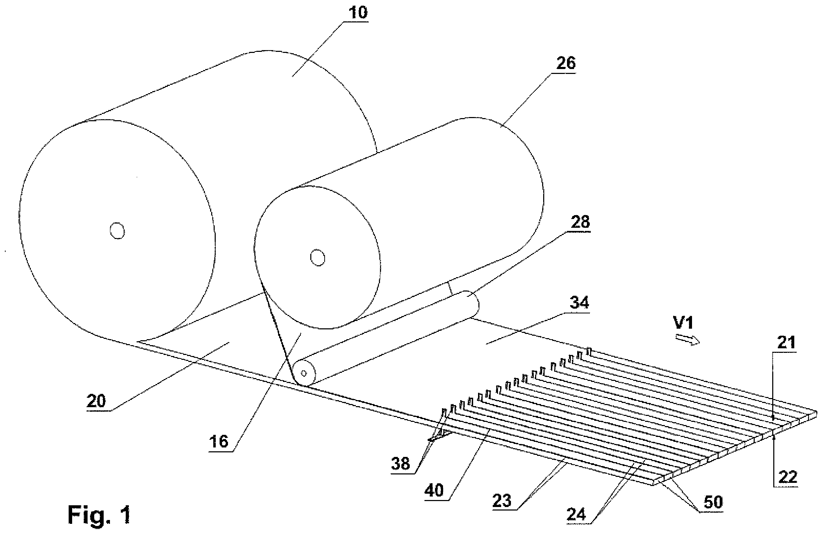

In Fig. 1 bis 3 ist eine erste Ausführungsform des erfindungsgemäßen Verfahrens schematisch dargestellt. In Fig. 1 sind erste optionale Schritte des Ausführungsbeispiels des erfindungsgemäßen Verfahrens dargestellt. Auf einer ersten Rolle 10 wird ein weicher Schaumstoff in Form einer aufgewickelten ersten Schaumstoffbahn 20 bereitgestellt. Der weiche Schaumstoff wird auf der ersten Rolle 10 in großen Längen von bis zu 200 m, vorzugsweise zwischen 5 und 100 m, mehr bevorzugt zwischen 10 und 60 m, bereitgestellt. Als Schaumstoffe können alle bekannten offenzelligen, gemischtzelligen oder geschlossenzelligen Weichschaumstoffe aus z.B. Polyurethan, Polyethylen, Polyvinylchlorid oder Polypropylen verwendet werden, die nach Kompression eine Rückstellung vollziehen. Die erste Schaumstoffbahn 20 kann vor der weiteren Bearbeitung bereits imprägniert sein, ist aber vorzugsweise noch nicht imprägniert.

Durch die Bereitstellung auf der ersten Rolle 10 kann die Schaumstoffbahn 20 besonders gut transportiert und verarbeitet werden. In der Regel befindet sich die Schaumstoffbahn 20 auf der ersten Rolle 10 in einem nicht oder nur geringfügig komprimierten Zustand. Es ist auch möglich, dass sich die Schaumstoffbahn 20 auf der ersten Rolle 10 in einem komprimierten Zustand befindet, allerdings muss dann nach dem Abwickeln von der ersten Rolle 10 eine rechtzeitige Rückstellung des Schaumstoffmaterials im Prozessablauf sichergestellt sein. Die Breite der Schaumstoffbahn 20 liegt üblicherweise zwischen 1 cm und 5 m, vorzugsweise zwischen 1,0 m und 1,5 m. Die Höhe der Schaumstoffbahn 20 beträgt im entspannten Zustand üblicherweise zwischen 5 und 150 mm, mehr bevorzugt zwischen 10 und 80 mm.

Alternativ ist es ebenso möglich, einzelne erste Schaumstoffbahnen 20 bereitzustellen, die nicht auf einer ersten Rolle 10 aufgewickelt sind, wodurch jedoch ein größerer Bereitstellungsraum benötigt wird.

Nach dem Abwickeln von der ersten Rolle 10 wird die erste Schaumstoffbahn 20 entlang einer ersten Förderrichtung bewegt, die durch den Pfeil V1 gekennzeichnet ist. Anschließend wird eine Folienbahn 16 auf die Oberseite 21 der ersten Schaumstoffbahn 20 aufgebracht, um so eine kaschierte Schaumstoffbahn 34 zu bilden. Anstelle der in Fig. 1 dargestellten Folienbahn 16 oder zusätzlich zu ihr kann auch eine Klebebandbahn und/oder eine Schicht eines klebstoffartigen flüssigen Mediums auf die Schaumstoffbahn 20 aufgebracht werden.

In der in Fig. 1 dargestellten Ausführungsform ist die Folienbahn 16 auf einer Folienvorratsrolle 26 bereitgestellt. Vorzugsweise wird die Folienbahn 16 und/oder die Klebebandbahn und/oder das klebstoffartige flüssige Medium von oben auf die Oberseite 21 der Schaumstoffbahn 20 aufgebracht. Dies erfolgt in der Regel im Bereich einer ersten Verbindungseinheit, die schematisch durch die Walze 28 dargestellt ist. Bevorzugt soll die Folienbahn 16 bzw. die Klebebandbahn bzw. das klebstoffartige flüssige Medium an der Schaumstoffbahn haften, aber nicht auflaminiert oder getrocknet sein. Der Verbindungsschritt umfasst bei einer Folienbahn 16 oder Klebebandbahn in der Regel allgemein einen Schritt, die Folienbahn 16 bzw. die Klebebandbahn und die Schaumstoffbahn 20 aneinander zu drücken. Im Falle eines klebstoffartigen flüssigen Mediums wird dieses vorzugsweise mittels Düsen (z.B. Schmelzdüse, Flachdüse, Mischdüse) oder über Walzenauftrag (Transferwalze) auf die Schaumstoffbahn 20 aufgebracht.

Die Klebebandbahn wird in der Regel mit mindestens einer Abziehfolie bereitgestellt, die vor dem Aufbringen auf die Schaumstoffbahn 20 von der Klebebandbahn abgelöst wird.

Die Folienbahn 16 kann auch selbst eine Schicht eines Klebebands oder eine Schicht eines Schmelzklebers umfassen. Es ist auch möglich, auf eine Folienbahn 16 einen Sprühkleber aufzubringen.

In alternativen Ausführungsbeispielen kann die Folienbahn 16 und/oder die Klebebandbahn und/oder das klebstoffartige flüssige Medium auch von unten an der Unterseite 22 der Schaumstoffbahn 20 angebracht werden. Ein weiteres Ausführungsbeispiel sieht das Aufbringen von Folienbahnen 16 und/oder die Klebebandbahnen und/oder das klebstoffartigen flüssigen Medien auf der Oberseite 21 und der Unterseite 22 der Schaumstoffbahn 20 vor.

Mittels mindestens eines Messers 38, vorzugsweise mehrerer paralleler Messer 38, wird mindestens ein durchgängiger Schnitt 40, vorzugsweise mehrere parallele durchgängige Schnitte 40, in die kaschierte Schaumstoffbahn 34 in Längsrichtung der kaschierten Schaumstoffbahn 34, vorzugsweise parallel zu den Längskanten 23 der kaschierten Schaumstoffbahn 34, eingebracht. Die Längskanten 23 sind dabei die Kanten der kaschierten Schaumstoffbahn 34, die parallel zur Förderrichtung V1 und orthogonal zur axialen Richtung der ersten Rolle 10 verlaufen. Zum Einbringen des mindestens einen durchgängigen Schnitts 40 in die Schaumstoffbahn 20 können neben den Messern 38 alle anderen dem Fachmann bekannten Verfahren zum Durchtrennen von Schaumstoffbahnen 20 verwendet werden, wie zum Beispiel Durchtrennen durch Sägen, beheizte Drähte, Laserschneiden oder Wasserstrahlschneiden.

Die durchgängigen Schnitte 40 erzeugen eine Mehrzahl von ersten Schaumstoffstreifen 50, die mit einem Folienstreifen 24 und/oder einem Klebebandstreifen und/oder einem klebstoffartigen flüssigen Medium versehen sind. Die durch den mindestens einen Schnitt 40 erzeugten ersten Schaumstoffstreifen 50 können eine unterschiedliche Breite aufweisen, vorzugsweise sind sie aber gleich breit. Die Breite eines Schaumstoffstreifens 50 liegt zwischen 5 mm und 30 cm, vorzugsweise zwischen 1 und 12 cm. Die ersten Schaumstoffstreifen 50 können an dieser Stelle auf eine Vorratsrolle (nicht dargestellt) aufgewickelt werden, um sie zur weiteren Bearbeitung zu versetzen und somit die Länge der gesamten Produktionslinie zu verkürzen, oder können der weiteren Verarbeitung direkt zugeführt werden. Insgesamt kann durch die Verwendung von Vorratsrollen als Zwischenspeicher die Anzahl der in einer Produktionslinie aufeinanderfolgenden Schritte variiert und somit die Länge der einzelnen Teilabschnitte der Produktionslinie entsprechend den vorherrschenden Platzverhältnissen angepasst werden.

Es ist ebenso denkbar, dass die erste Schaumstoffbahn 20 zuerst in Schaumstoffstreifen 50 geschnitten wird und die einzelnen Schaumstoffstreifen 50 anschließend mit den Folienstreifen 24 und/oder Klebebandstreifen und/oder dem klebstoffartigen flüssigen Medium ausgerüstet werden. In diesem Fall können sich die Folienstreifen 24 und/oder Klebebandstreifen und/oder die Schicht des klebstoffartigen flüssigen Mediums auch nur über einen Teil einer Seitenfläche der Schaumstoffstreifen 50 erstrecken. Ebenso kann ein Folienstreifen 24 über mehrere Seitenflächen angeordnet sein.

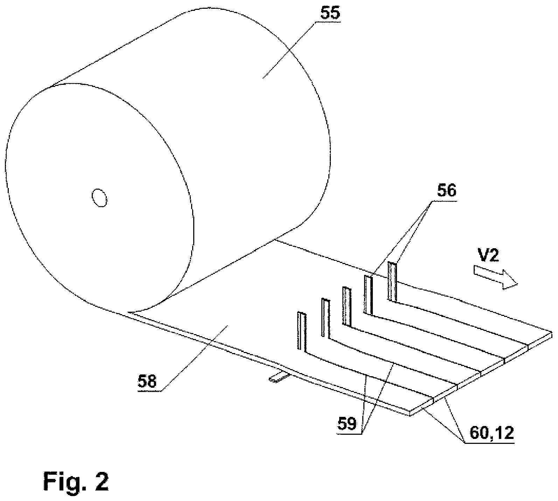

In Fig. 2 ist ein Beispiel für den optionalen Ablauf der Herstellung von zweiten Schaumstoffstreifen 60 abgebildet. Hierzu ist eine zweite Schaumstoffbahn 58 aus weichem Schaumstoff auf einer zweiten Rolle 55 vorzugsweise unkomprimiert bereitgestellt. Nach dem Abwickeln von der zweiten Rolle 55 wird die zweite Schaumstoffbahn 58 entlang einer zweiten Förderrichtung V2 bewegt. Für die Art des Schaumstoffs gilt selbiges wie für den Schaumstoff der ersten Schaumstoffbahn 20.

Mittels mindestens eines Messers 56, vorzugsweise mehrerer paralleler Messer 56, wird mindestens ein durchgängiger Schnitt 59, vorzugsweise mehrere parallele durchgängige Schnitte 59, in die zweite Schaumstoffbahn 58 in einer Richtung parallel zu den Längskanten der Schaumstoffbahn 58 eingebracht. Der mindestens eine durchgängige Schnitt 59 erzeugt so eine Mehrzahl von zweiten Schaumstoffstreifen 60. Auch hier können neben den Messern 56 alle anderen dem Fachmann bekannten Verfahren zum Durchtrennen von Schaumstoffbahnen angewendet werden, beispielsweise Durchtrennen durch Sägen, beheizte Drähte, Laserschneiden oder Wasserstrahlschneiden. Ebenso ist es auch hier möglich, die zweite Schaumstoffbahn 58 ohne Aufwicklung zu einer zweiten Rolle 55 bereitzustellen. Die zweiten Schaumstoffstreifen 60 können an dieser Stelle zu einer Vorratsrolle (nicht dargestellt) aufgewickelt werden oder direkt der weiteren Verarbeitung zugeführt werden. Schließlich können die zweiten Schaumstoffstreifen 60 auch einzeln bereitgestellt werden. Außerdem können die zweiten Schaumstoffstreifen 60 ebenso wie die ersten Schaumstoffstreifen 50 auf mindestens einer Seitenfläche mit einem Folienstreifen 24 und/oder einem Klebebandstreifen und/oder einem klebstoffartigen flüssigen Medium versehen sein.

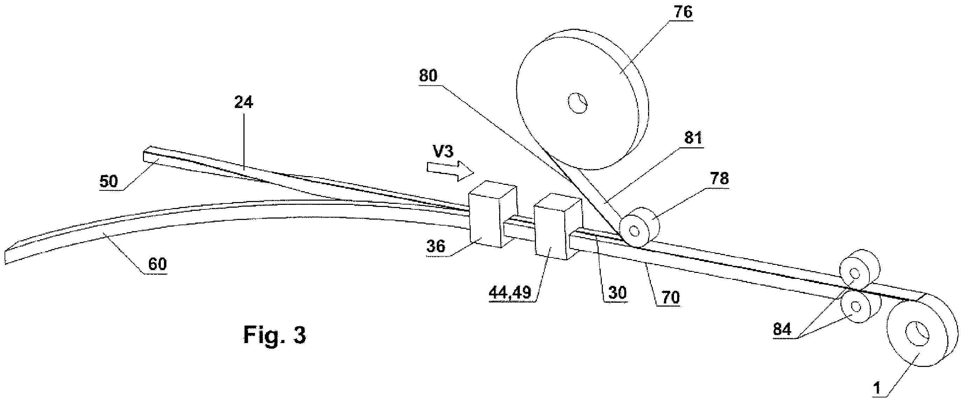

Fig. 3 zeigt wesentliche Schritte des ersten Ausführungsbeispiels des erfindungsgemäßen Herstellungsverfahrens, der sich an die Schritte aus Fig. 1 oder 2 anschließen kann. Grundsätzlich ist es bei allen Ausführungsbeispielen der Erfindung möglich, dass die mit mindestens einem Folienstreifen 24 und/oder Klebebandstreifen versehenen ersten Schaumstoffstreifen 50 bereits zuvor, z.B. an einem anderen Ort oder von einem anderen Hersteller, vorkonfektioniert wurden und im Rahmen des erfindungsgemäßen Verfahrens lediglich in dieser fertigen Form verwendet werden. Das gleiche trifft auf die zweiten Schaumstoffstreifen 60 zu.

In dem in Fig. 3 dargestellten ersten Ausführungsbeispiel werden ein erster Schaumstoffstreifen 50 und ein zweiter Schaumstoffstreifen 60 aus weichem Schaumstoff derart zusammengeführt, dass eine Schaumstoff-Sperrschicht-Bahn 70 entsteht, bei der eine Sperrschicht 30 zwischen den aneinander grenzenden Schaumstoffstreifen 50, 60 angeordnet ist. Der Schaumstoffstreifen 50 wird dazu vorzugsweise mittels einer geeigneten Umlenkvorrichtung um 90 Grad um seine Längsachse gedreht, wobei sich die Längsachse entlang einer dritten Förderrichtung V3 erstreckt. Durch diese Drehung befindet sich die der Folienstreifen 24 und/oder der Klebebandstreifen und/oder die Schicht des klebstoffartigen flüssigen Mediums anschließend auf einer dem Schaumstoffstreifen 60 zugewandten Seitenfläche des Schaumstoffstreifens 50. Spätestens ab der Zusammenführung werden der erste Schaumstoffstreifen 50 und der zweite Schaumstoffstreiten 60 gemeinsam in Förderrichtung V3 weiterbewegt. Es können auch mehrere erste Schaumstoffstreifen 50 mit einem oder mehreren zweiten Schaumstoffstreifen 60 zusammengeführt werden, oder mehrere zweite Schaumstoffstreifen 60 mit einem oder mehreren ersten Schaumstoffstreifen 50. Der mindestens eine erste Schaumstoffstreifen 50 kann auch so bereitgestellt werden, dass keine Drehung des ersten Schaumstoffstreifens 50 notwendig ist. Ebenso kann der mindestens eine zweite Schaumstoffstreifen 60 so bereitgestellt werden, dass keine Drehung des ersten Schaumstoffstreifens 50 notwendig ist. Wichtig ist dabei immer, dass jede mit mit einem Folienstreifen 24 und/oder einem Klebebandstreifen und/oder einem klebstoffartigen flüssigen Medium versehene Seitenfläche des ersten Schaumstoffstreifens 50 dem angrenzenden Schaumstoffstreifen 50, 60 zugewandt ist.

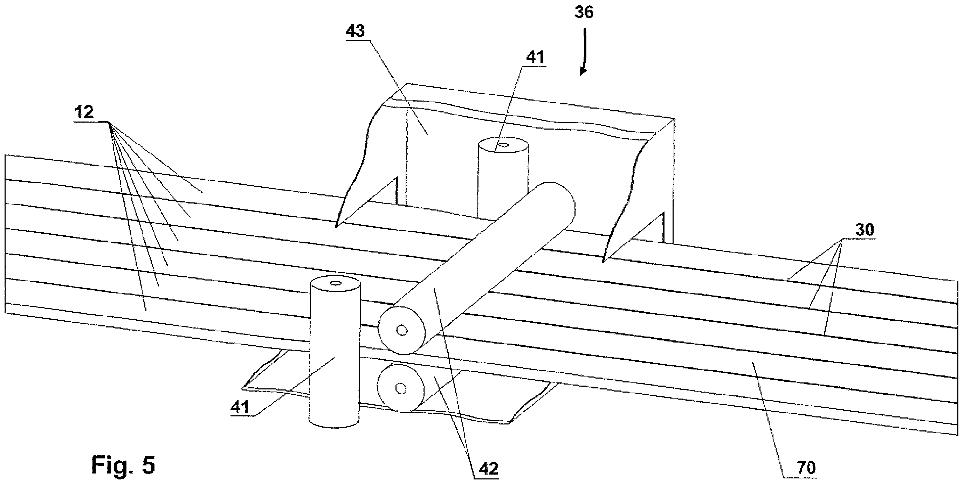

Das Verbinden der Schaumstoffstreifen 50, 60 kann neben dem Zusammenführen der Schaumstoffstreifen 50, 60 noch weitere Maßnahmen erfordern. Beispielsweise kann eine Verbindungseinheit 36 vorgesehen sein, in der ein Schritt der Wärmeaufbringung und/oder ein Schritt, die Schaumstoffstreifen 50, 60 aneinander zu drücken, erfolgt. Eine mögliche Ausgestaltung der Verbindungseinheit 36 wird weiter unten unter Bezugnahme auf Fig. 5 näher beschrieben.

In jedem Fall wird beim Zusammenführen und Verbinden der Schaumstoffstreifen 50, 60 aus dem Folienstreifen 24 und/oder dem Klebebandstreifen und/oder dem klebstoffartigen flüssigen Medium eine Sperrschicht 30 gebildet.

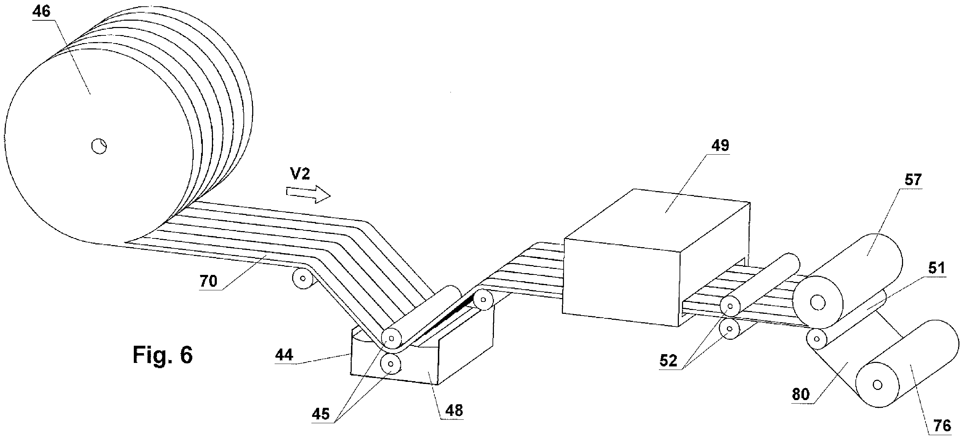

Die Schaumstoff-Sperrschicht-Bahn 70 kann nun beispielsweise zur verzögerten Rückstellung imprägniert werden. Hierzu eignet sich beispielsweise eine Imprägniereinheit 44 mit nachfolgender Trockeneinheit 49 wie unten unter Bezugnahme auf Fig. 6 näher beschrieben. Die Imprägnierung kann aber auch an anderen Stellen des Herstellungsprozesses stattfinden oder auch entfallen.

Nach dem Zusammenführen und Verbinden des mindestens einen ersten Schaumstoffstreifens 50 mit dem mindestens einen zweiten Schaumstoffstreifen 60 zu einer Schaumstoff-Sperrschicht-Bahn 70 und dem optionalen Imprägnieren wird eine gemeinsame Klebeschicht 80 auf alle Schaumstoffstreifen 50, 60 der Schaumstoff-Sperrschicht-Bahn 70 aufgebracht. Das Aufbringen der gemeinsamen Klebeschicht 80 erfolgt auf einer Fläche der Schaumstoff-Sperrschicht-Bahn 70, die senkrecht zu der mindestens einen Sperrschicht 30 verläuft.

Vorzugsweise ist die Klebeschicht 80 auf einer Vorratsrolle 76 bereitgestellt und wird im Bereich einer Aufbringstation, hier schematisch dargestellt durch die Walze 78, auf die Schaumstoff-Sperrschicht-Bahn 70 aufgebracht und dort vorzugsweise festgedrückt oder festgewalzt. Besonders geeignet ist die Verwendung von doppelseitigem Klebeband als Klebeschicht 80. Dieses hat den Vorteil, dass es einfach auf die Schaumstoff-Sperrschicht-Bahn 70 aufzubringen ist und somit zugleich eine Klebefläche auf der der Schaumstoff-Sperrschicht-Bahn 70 abgewandten Seite bereitgestellt wird, mittels derer das Dichtband 2 bei der Montage mit einem Rahmenprofil eines Fensters verbunden werden kann. Diese zweite Klebefläche des doppelseitigen Klebebands auf der der Schaumstoff-Sperrschicht-Bahn 70 abgewandten Seite ist zunächst mit einer Abziehfolie 81 kaschiert, um ein Verkleben während der weiteren Bearbeitung zu vermeiden. Die Klebeschicht 80 kann auch Textilgewebe oder Vliesschichten enthalten.

Nach dem Aufbringen der gemeinsamen Klebeschicht 80 auf alle Schaumstoffstreifen 50, 60 der Schaumstoff-Sperrschicht-Bahn 70 wird diese komprimiert zu einer Dichtbandrolle 1 aufgewickelt. Für die Komprimierung kann beispielsweise ein oder mehrere Paare von Komprimierwalzen 84 verwendet werden. Alternativ oder zusätzlich kann auch eine Komprimierwalze (nicht dargestellt) direkt beim Aufwickeln des Dichtbands 2 auf die Dichtbandrolle 1 mit der Dichtbandrolle zusammenwirken.

Es können bei allen Ausführungsbeispielen auch zwei Klebeschichten 80 auf gegenüberliegenden Seiten der Schaumstoff-Sperrschicht-Bahn 70 aufgebracht werden.

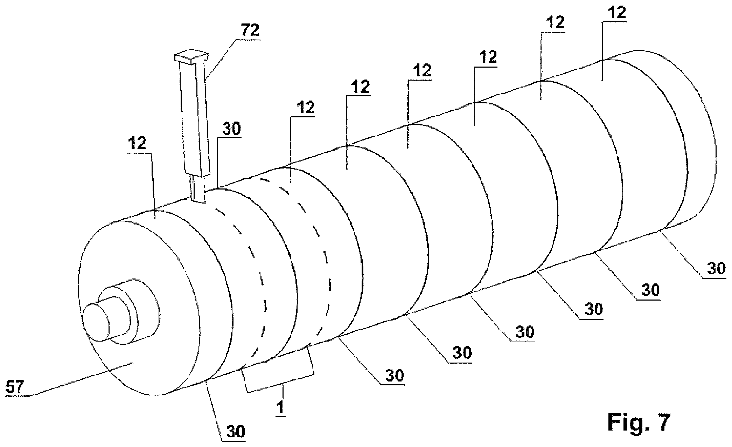

In einem alternativen Ausführungsbeispiel wird eine Schaumstoff-Sperrschicht-Bahn 70 aus einer Vielzahl an Schaumstoffstreifen 50, 60 und Sperrschichten 30 nach dem Aufbringen einer gemeinsamen Klebeschicht 80 komprimiert zu einer breiten Rolle (nicht dargestellt) aufgewickelt, die dann mittels mindestens eines Messers oder mindestens einer Säge zu Dichtbandrollen 1 gewünschter Breite durchtrennt werden kann, wie weiter unten noch unter Bezugnahme auf Fig. 7 näher beschrieben wird.

Die Förderrichtungen V1, V2 und V3 können je nach Anordnung der Teilstrecken der Produktionslinie identisch oder zueinander verschieden sein.

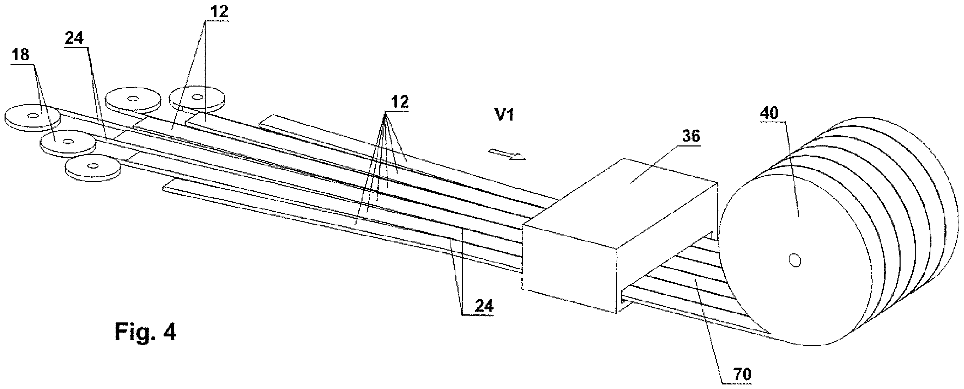

In Fig. 4 bis 7 ist ein zweites Ausführungsbeispiel des erfindungsgemäßen Verfahrens dargestellt.

Vor den in Fig. 4 dargestellten Schritten sind wiederum Schaumstoffstreifen 12 bereitzustellen. Die Herstellung dieser Schaumstoffstreifen 12 kann wie die Herstellung der Schaumstoffstreifen 60 in Fig. 2 erfolgen. Die Schaumstoffstreifen 12 können eine unterschiedliche Breite aufweisen, vorzugsweise sind sie aber gleich breit. Die Breite eines Schaumstoffstreifens 12 liegt vorzugsweise zwischen 5 und 150 mm, mehr bevorzugt zwischen 10 und 80 mm.

Eine gewünschte Zahl an einzelnen Schaumstoffstreifen 12 wird nun über geeignete Zugmittel und Führungselemente zusammengeführt. In jeden Zwischenraum zwischen zwei Schaumstoffstreifen 12 wird außerdem jeweils ein Folienstreifen 24 oder ein Klebebandstreifen eingebracht. Jeder Folienstreifen 24 oder Klebebandstreifen ist dazu vorzugsweise auf einer Spule 18 oder Rolle bereitgestellt und wird bevorzugt über geeignete Führungselemente in den Zwischenraum eingebracht. Jede Spule 18 kann in beliebiger Position zu den Schaumstoffstreifen 12 angeordnet sein, wobei jeder Folienstreifen 24 oder Klebebandstreifen stets im Wesentlichen in Förderrichtung V1 in den entsprechenden Zwischenraum eingebracht wird. Es können dabei auch Umlenkelemente, beispielsweise Umlenkschultern oder Umlenkrollen, verwendet werden. Es ist auch denkbar, eine Folienbahn oder Klebebandbahn (vorzugsweise in Rollenform) bereitzustellen und diese längs in einzelne Folienstreifen 24 oder Klebebandstreifen zu zerschneiden, bevor diese in die Zwischenräume zwischen den Schaumstoffstreifen 12 eingebracht werden.

Klebebandstreifen werden in der Regel mit mindestens einer Abziehfolie bereitgestellt, die vordem Einfügen in den Zwischenraum vom Klebebandstreifen abgelöst wird.

Es ist auch denkbar, jede Spule 18 derart anzuordnen, dass der Folienstreifen 24 oder Klebebandstreifen ohne Umlenkung in den entsprechenden Zwischenraum eingebracht werden kann. Zudem ist es möglich, die Folienstreifen 24 oder Klebebandstreifen in jeder anderen geeigneten Form, beispielsweise als Streifen vorbestimmter Länge, bereitzustellen und einzubringen.

Nach dem Einbringen jedes Folienstreifens 24 oder Klebebandstreifens in den Zwischenraum zwischen zwei benachbarten Schaumstoffstreifen 12 erfolgt die Verbindung aller Folienstreifen 24 oder Klebebandstreifen (vorzugsweise bestehend aus Haftkleber) mit den zwei angrenzenden Schaumstoffstreifen 12, vorzugsweise im Bereich einer Verbindungseinheit 36. Der Verbindungsschritt umfasst in der Regel allgemein einen Schritt der Wärmeaufbringung und/oder einen Schritt, die Schaumstoffstreifen 12 aneinander zu drücken. Bei Folienstreifen 24 erfolgt die Verbindung mit den Schaumstoffstreifen 12 in der Verbindungseinheit 36 vorzugsweise durch Laminierung. Der Folienstreifen 24 kann auch selbst einen oder mehrere Klebebandstreifen oder eine feste Schicht eines Schmelzklebers umfassen.

Außerdem ist es möglich, dass anstelle der Folienstreifen 24 oder Klebebandstreifen ein klebstoffartiges flüssiges Medium mittels Düsen (z.B. Schmelzdüse, Flachdüse, Mischdüse) oder über Walzenauftrag (Transferwalze) in die Zwischenräume zwischen den Schaumstoffstreifen 12 eingebracht wird. Je nach Klebstoff kann anschließend, vorzugsweise in der Verbindungseinheit 36, eine Verbindung der Schaumstoffstreifen 12 stattfinden, wobei der Klebstoff in der Regel verfestigt wird. Es kommen grundsätzlich chemische und physikalische Arten der Verfestigung in Frage. Auch hier wird die Verbindung der Schaumstoffstreifen 12 in der Regel wieder einen Schritt der Wärmeaufbringung und/oder einen Schritt, die Schaumstoffstreifen 12 aneinander zu drücken, umfassen. Es ist auch möglich, auf einen Folienstreifen 24 gemäß Fig. 4 einen Sprühkleber aufzubringen.

Grundsätzlich wird eine Schaumstoff-Sperrschicht-Bahn 70 erzeugt, die mindestens eine Sperrschicht 30 aufweist, die auf den Folienstreifen 24, den Klebebandstreifen und/oder das klebstoffartige flüssige Medium zurückzuführen ist.

Eine Detailansicht einer möglichen Verbindungseinheit 36 ist in Fig. 5 gezeigt. Die Verbindungseinheit 36 umfasst vorzugsweise ein Paar von Druckwalzen 41, die an beiden Schmalseiten der Schaumstoff-Sperrschicht-Bahn 70 angeordnet sind und die einzelnen Schaumstoffstreifen 12 aneinander drücken. Die Druckwalzen 41 sind vorzugsweise jeweils drehbar um eine vertikale Achse gelagert, wobei die Drehrichtung der beiden Druckwalzen 41 gegensinnig ist. Vorzugsweise ist in der Verbindungseinheit 36 außerdem ein Paar von Zugwalzen 42 angeordnet, die sich über die Breite der Schaumstoff-Sperrschicht-Bahn 70 erstrecken und die Schaumstoff-Sperrschicht-Bahn 70 in einem Walzenspalt aufnehmen. Die beiden Zugwalzen 42 sind jeweils um eine horizontale Achse gegensinnig angetrieben und ziehen die Schaumstoff-Sperrschicht-Bahn 70 somit durch die Verbindungseinheit 36. Derartige Paare von Zugwalzen 42 können auch an anderen Stellen des Herstellungsprozesses verwendet werden. In der Verbindungseinheit 36 können die Zugwalzen 42 auch stromauf der Druckwalzen 41 angeordnet sein.

Vorzugsweise umfasst die Verbindungseinheit 36 zudem eine Heizvorrichtung 43, die in Fig. 5 lediglich angedeutet ist. Die Heizvorrichtung 43 kann vorzugsweise ein Gehäuse umfassen, das die Schaumstoff-Sperrschicht-Bahn 70 umgibt. Die Heizvorrichtung 43 kann auf alle möglichen Arten der Erwärmung ausgerichtet sein. Die Heizvorrichtung 43 kann in Kombination mit den Druckwalzen 41 verwendet werden. Ebenso ist es möglich, lediglich die Heizvorrichtung 43 oder lediglich die Druckwalzen 41 in der Verbindungseinheit 36 vorzusehen. Die Heizvorrichtung 43 kann auch darauf ausgerichtet sein, nur obere und untere Randbereiche der Schaumstoff-Sperrschicht-Bahn 70 fest miteinander zu verbinden, indem die Temperatur und/oder Zeitdauer der Erhitzung entsprechend eingestellt werden.

Die Funktion jeder Sperrschicht 30 liegt vorzugsweise in einer Reduzierung oder Verhinderung des Durchtritts von Luft und/oder Wasserdampf. Dies gilt auch für alle anderen Ausführungsbeispiele.

Hinter der Verbindungseinheit 36 kann die Schaumstoff-Sperrschicht-Bahn 70 auf eine Vorratsrolle aufgewickelt werden. Es ist aber auch möglich, die Schaumstoff-Sperrschicht-Bahn 70 kontinuierlich den weiteren Bearbeitungsschritten zuzuführen. Dadurch kann die Anzahl der in einer Produktionslinie aufeinanderfolgenden Schritte variiert und somit die Länge der einzelnen Teilabschnitte der Produktionslinie entsprechend den vorherrschenden Platzverhältnissen angepasst werden.

Wenn die Schaumstoffstreifen 12 bereits vorher imprägniert sind oder das Dichtband unimprägniert bleiben soll, kann an dieser Stelle bereits die Zwischenrolle 57 aus Fig. 7 oder sogar direkt das Endprodukt, die Dichtbandrolle 1, erzeugt werden.

Falls dies nicht der Fall ist, sind in Fig. 6 die weiteren Schritte des zweiten Ausführungsbeispiels des erfindungsgemäßen Verfahrens dargestellt. Hierzu wird die zuvor auf eine Vorratsrolle 40 aufgewickelte Schaumstoff-Sperrschicht-Bahn 70 zunächst wieder abgewickelt. Bei dem in Fig. 6 dargestellten Ausführungsbeispiel wird die Schaumstoff-Sperrschicht-Bahn 70 entlang einer zweiten Förderrichtung V2, die je nach Anordnung der Teilstrecken der Produktionslinie identisch oder verschieden zu V1 sein kann, in einem nächsten Schritt durch eine Imprägniereinheit 44 geführt. Zwei Walzen 45 führen die Schaumstoff-Sperrschicht-Bahn 70 dabei in ein Bad eines geeigneten Imprägnats 48 und der Schaumstoff saugt sich mit dem Imprägnat voll. Übliche Imprägnate und Verfahren zum Imprägnieren von Schaumstoffen sind dem Fachmann bekannt. Vorzugsweise wird die Schaumstoff-Sperrschicht-Bahn 70 zwischen den Walzen 45 komprimiert, um durch die anschließende Rückstellung des Schaumstoffs die Aufnahme des Imprägnats 48 zu fördern. Nach dem Imprägnieren in der Imprägniereinheit 44 erfolgt das Trocknen der imprägnierten Schaumstoff-Sperrschicht-Bahn 70 in einer Trockeneinheit 49. In dieser wird die imprägnierte Schaumstoff-Sperrschicht-Bahn 70 auf bekannte Weise, z.B. durch Heizgebläse oder Heizstrahler, getrocknet. Anschließend wird die Schaumstoff-Sperrschicht-Bahn 70, vorzugsweise unter Verwendung von Kompressionswalzen 51, 52, zu einer Zwischenrolle 57 aufgerollt. Dabei kann es ausreichen, wenn nur eine Kompressionswalze 51 direkt am Übergang zur Zwischenrolle 57 verwendet wird, oder es kann ein Paar von Kompressionswalzen 52 vorher zur Komprimierung der Schaumstoff-Sperrschicht-Bahn 70 verwendet werden. Im dargestellten Beispielsfall werden beide Optionen in Kombination angewendet. Auf der Zwischenrolle 57 liegt die Schaumstoff-Sperrschicht-Bahn 70 im stark komprimierten Zustand vor.

Die Trockeneinheit 49 nach der Imprägniereinheit 44 kann in einer besonderen Ausführungsform auch als Heizvorrichtung zum festen Verbinden aller Elemente der Schaumstoff-Sperrschicht-Bahn 70 fungieren, wenn zuvor noch keine Heizvorrichtung 43 verwendet wurde. Auf diese Weise könnte ein Heizvorgang entfallen. Dies gilt auch bei der Ausführungsform der Fig. 3.

Auf die Schaumstoff-Sperrschicht-Bahn 70 wird außerdem vorzugsweise eine Klebeschicht 80, beispielsweise ein einseitig mit einer Abziehfolie kaschiertes doppelseitiges Klebeband, aufgebracht. Die Klebeschicht 80 ist wiederum auf einer Vorratsrolle 76 oder Vorratsspule gelagert und wird von dieser abgezogen. Vorzugsweise erfolgt die Aufbringung der Klebeschicht 80 auf die Schaumstoff-Sperrschicht-Bahn 70 gleichzeitig mit der Aufwicklung der Schaumstoff-Sperrschicht-Bahn 70 zur Zwischenrolle 57, wobei die Kompressionswalze 51 den Druck zur Verbindung von Klebeschicht 80 und Schaumstoff-Sperrschicht-Bahn 70 erzeugt.

Das Imprägnieren des Schaumstoffs kann auch an anderen Positionen des Herstellungsverfahrens erfolgen. Ebenso kann das Imprägnieren des Schaumstoffs komplett entfallen oder bereits vor dem Bereitstellen der Schaumstoffstreifen 12 geschehen sein. Vorzugsweise findet das Imprägnieren des Schaumstoffs jedoch nach dem Einbringen jedes Folienstreifens 24 oder Klebebandstreifens in den Zwischenraum zwischen zwei benachbarten Schaumstoffstreifen 12 statt, da jeder Folienstreifen 24 oder Klebebandstreifen besser an einem nicht imprägnierten Schaumstoff haftet und sich folglich besser mit diesem verbinden lässt.

Wie in Fig. 7 dargestellt, wird die Zwischenrolle 57 gemäß der Variante des zweiten Ausführungsbeispiel des erfindungsgemäßen Verfahrens an einer oder an mehreren Stellen in axialer Richtung durchtrennt, um eine Mehrzahl von Dichtbandrollen 1 zu erzeugen, die weniger breit sind als die Zwischenrolle 57. Vorzugsweise wird das Durchtrennen der Zwischenrolle 57 mittels einer oder mehrerer paralleler Sägen 72 durchgeführt. In Fig. 7 ist nur eine Säge 72 dargestellt, und ein weiterer paralleler Schnitt zum Durchtrennen der Zwischenrolle 57 ist gestrichelt angedeutet. Auch hier können andere geeignete Verfahren zum Durchtrennen verwendet werden (z.B. Messer, beheizte Drähte, Laserschneiden, Wasserstrahlschneiden).

Die Zwischenrolle 57 wird derart in Dichtbandrollen 1 geschnitten, dass sich Schaumstoffstreifen 12 und die mindestens eine Sperrschicht 30 in axialer Richtung der Dichtbandrolle 1 abwechseln. Dabei ist in einer Dichtbandrolle 1 jede radial verlaufende Sperrschicht 30 zwischen zwei Schaumstoffstreifen 12 aufgenommen, wodurch das Dichtband 2 eine erhöhte Abdichtung gegen Luftzug und/oder Dampfdiffusion aufweist und jede Sperrschicht 30 gleichzeitig vor äußerer Beschädigung geschützt ist. Aus Gründen der Übersichtlichkeit ist die vorzugsweise vorhandene, mit einer Abziehfolie kaschierte doppelseitige Klebeschicht 80 hier nicht dargestellt.

Im Ausführungsbeispiel der Fig. 7 werden Dichtbandrollen 1 mit genau einer Sperrschicht 30 hergestellt. Ebenso können Dichtbandrollen 1 mit mehreren inneren Sperrschichten 30 hergestellt werden. In diesem Fall können die Sperrschichten 30 eines Dichtbands 2 unterschiedliche Dampfdiffusionsdichtigkeiten aufweisen. Ebenso können für die Bildung der Sperrschichten 30 Folienstreifen 24 (oder Klebematerialien) verwendet werden, deren Dampfdiffusionsdichtigkeit sich variabel an die Umgebungsbedingungen anpasst. Der Schritt des Schneidens der Zwischenrolle 57 in einzelne Dichtbandrollen 1 kann auch entfallen, wenn die gesamte Zwischenrolle 57 bereits als Dichtbandrolle 1 verwendet wird. In diesem Fall kann es zusätzlich sinnvoll sein, im Sinne einer glatteren Außenfläche der Dichtbandrolle 1 dennoch die Randbereiche der Zwischenrolle 57 abzutrennen. Andernfalls erfolgt die Herstellung der Dichtbandrolle 1 beispielsweise wie rechts in Fig. 3 dargestellt.

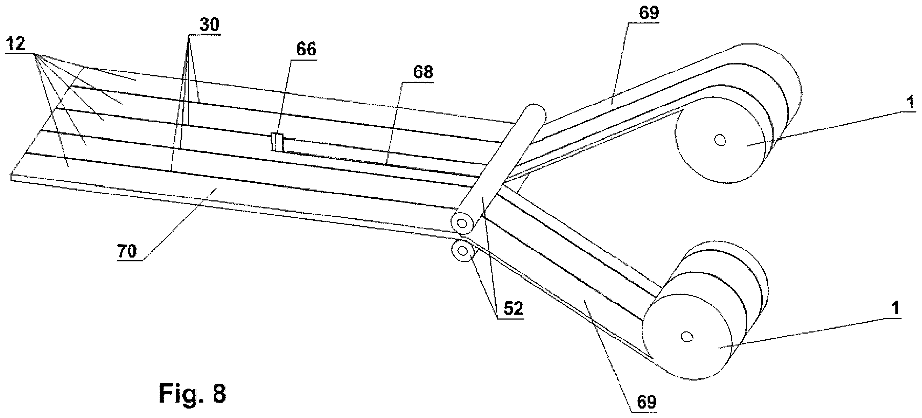

Fig. 8 zeigt eine weitere alternative Möglichkeit der finalen Bearbeitung der Schaumstoff-Sperrschicht-Bahn 70 zur Herstellung von Dichtbandrollen 1. Neben der in Fig. 6 rechts dargestellten Variante kann die Schaumstoff-Sperrschicht-Bahn 70 auch mittels eines oder mehrerer Messer 66 oder Sägen im Bereich mindestens eines Schaumstoffstreifens 12 in Längsrichtung durchtrennt werden. Hierdurch wird mindestens ein Schnitt 68 in die Schaumstoff-Sperrschicht-Bahn 70 eingefügt, wodurch mindestens zwei Schaumstoff-Sperrschicht-Streifen 69 erzeugt werden. Jeder Schaumstoff-Sperrschicht-Streifen 69 kann dann anschließend zu einer fertigen Dichtbandrolle 1 aufgewickelt werden. Vorzugsweise erfolgt zudem die Aufbringung einer mit einer Abziehfolie versehenen doppelseitigen Klebeschicht 80 wie in Fig. 6 (in Fig. 8 nicht dargestellt). Auf diese Weise kann der in Fig. 7 dargestellte Schritt des Zerteilens einer Zwischenrolle 57 entfallen. Vorzugsweise können auch hier Kompressionswalzen 52 für eine Vorkomprimierung der einzelnen Schaumstoff-Sperrschicht-Streifen 69 verwendet werden.

Die beiden in Fig. 1 bis 3 bzw. 4 bis 7 beschriebenen Varianten unterscheiden sich nur in der Herstellung der Schaumstoff-Sperrschicht-Bahn 70. Anschließend können alle weiteren Bearbeitungsschritte identisch vorgenommen werden. Mit beiden Ausführungsbeispielen können breitere Zwischenrollen 57 erzeugt werden, die anschließend in einzelne Dichtbandrollen 1 unterteilt werden (siehe Fig. 7). Ebenso können mit beiden Ausführungsbeispielen direkt schmale Dichtbandrollen 1 hergestellt werden, ohne dass eine breite Zwischenrolle 57 erzeugt wird (siehe Fig. 3). Auch die Variante aus Fig. 8 ist mit beiden Ausführungsbeispielen möglich.

Neben den Zugkräften durch stromabwärtiges Aufwickeln werden alle Schaumstoffbahnen, Schaumstoffstreifen, Schaumstoff-Sperrschicht-Bahnen oder Schaumstoff-Sperrschicht-Streifen vorzugsweise durch Walzen, besonders bevorzugt durch Paare gegenläufig bewegter Walzen, vorwärtsbewegt. Auch Laufbänder können verwendet werden. Derartige Fortbewegungsmittel können auch für die Folienstreifen, Folienbahnen, Klebebandstreifen oder Klebebandbahnen verwendet werden.

Die in den Ausführungsbeispielen genannten Heizvorrichtungen sind üblicherweise als Warmluftgebläse ausgestaltet. Es kommt aber auch Strahlungserhitzung in Frage, beispielsweise mittels einer Infrarotheizung oder Mikrowellenheizung.

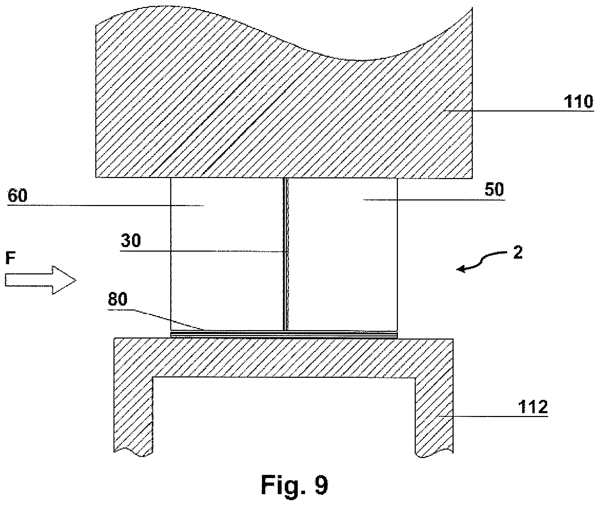

Fig. 9 zeigt eine Einbausituation des von einer erfindungsgemäßen Dichtbandrolle 1 abgewickelten Dichtbands 2. Für den Einbau ist das Dichtband 2 zunächst von der Dichtbandrolle 1 abzuwickeln und in Streifen beliebiger Länge zu schneiden. Üblicherweise wird die Länge der Dichtbandstreifen an die Außenkonturen eines abzudichtenden Fensterrahmens oder eines Türrahmens angepasst. Das Dichtband 2 wird dann vorzugsweise mittels der Klebeschicht 80 oder mittels anderer Klebeschichten, Klebebänder oder anderer geeigneter Mittel am Fensterrahmen 112 oder Türrahmen befestigt. Bei der Verwendung eines doppelseitigen Klebebandes als Klebeschicht 80 muss daher lediglich die Abziehfolie 81, mit der das doppelseitige Klebeband auf seiner den Schaumstoffstreifen 50, 60 abgewandten Seite kaschiert ist, entfernt werden, bevor das Dichtband 2 direkt am Fensterrahmen 112 angebracht werden kann.

In der in Fig. 9 abgebildeten Einbausituation ist das Dichtband 2 zwischen einem Fensterrahmen 112 und einem Mauerwerk 110 aufgenommen, um die dazwischen liegende Fuge abzudichten. Das abgebildete Dichtband 2 umfasst in diesem Fall einen ersten Schaumstoffstreifen 50, der mit einer Sperrschicht 30 versehen ist, und einen zweiten Schaumstoffstreifen 60. Die Sperrschicht 30 ist schützend zwischen den Schaumstoffstreifen 50, 60 aufgenommen, wodurch Beschädigungen bei der Lagerung, dem Transport und der Montage der Dichtbandrolle 1 bzw. des Dichtbandes 2 vermieden werden.

Das Dichtband 2 ist so zu verbauen, dass mindestens eine Sperrschicht 30 vom Fensterrahmen 112 zum Mauerwerk 110 und somit im Wesentlichen orthogonal zu einer Funktionsrichtung F des Dichtbands 2 verläuft. Die Funktionsrichtung F erstreckt sich dabei parallel zu den die abzudichtende Fuge bildenden Flächen des Fensterrahmens 112 und des Mauerwerks 110 von einer Raumaußenseite (in Fig. 9 links) zu einer Rauminnenseite (in Fig. 9 rechts). Auf diese Weise kann eine zuverlässige Abdichtung gegen Luftzug und Dampfdiffusion gewährleistet werden.

Zur weiteren Gestaltung der Dichteigenschaften des Dichtbandes 2 kann der erste Schaumstoffstreifen 50 aus einem anderen Schaumstoffmaterial bestehen als der zweite Schaumstoffstreifen 60. Ebenso können die ersten Schaumstoffstreifen 50 und die zweiten Schaumstoffstreifen 60 mit unterschiedlichem Imprägnat imprägniert sein oder auch nur die ersten Schaumstoffstreifen 50 oder nur die zweiten Schaumstoffstreifen 60 imprägniert sein. In einem weiteren Ausführungsbeispiel können die ersten Schaumstoffstreifen 50 eine andere Farbe als die zweiten Schaumstoffstreifen 60 aufweisen. Dadurch kann beispielsweise eine Kennzeichnung der bevorzugten Einbaurichtung des Dichtbands 2 erfolgen.

Grundsätzlich ist jede beliebige Anzahl an Sperrschichten 30 im Dichtband 2 möglich. Ebenso sind verschiedene Breiten und/oder Höhen der ersten Schaumstoffstreifen 50 und/oder verschiedene Breiten und/oder Höhen der zweiten Schaumstoffstreifen 60 denkbar, auch innerhalb desselben Dichtbandes 2. Innerhalb eines Dichtbands 2 können auch der oder die ersten Schaumstoffstreifen 50 eine andere Breite und/oder Höhe aufweisen als der oder die zweiten Schaumstoffstreifen 60. Die Breite des Dichtbands 2 liegt üblicherweise zwischen 5 mm und 20 cm, vorzugsweise zwischen 1 cm und 12 cm. Im entspannten Zustand hat das Dichtband 2 in der Regel eine Höhe von zwischen 5 mm und 30 cm, vorzugsweise zwischen 1 und 12 cm.

In dem in Fig. 9 dargestellten Ausführungsbeispiel bildet genau ein erster Schaumstoffstreifen 50 zusammen mit genau einem zweiten Schaumstoffstreifen 60 die Schaumstoff-Sperrschicht-Bahn 70, die zu der Dichtbandrolle 1 aufgewickelt ist. Daneben existieren viele weitere Möglichkeiten des Aufbaus eines erfindungsgemäßen Dichtbands 2.

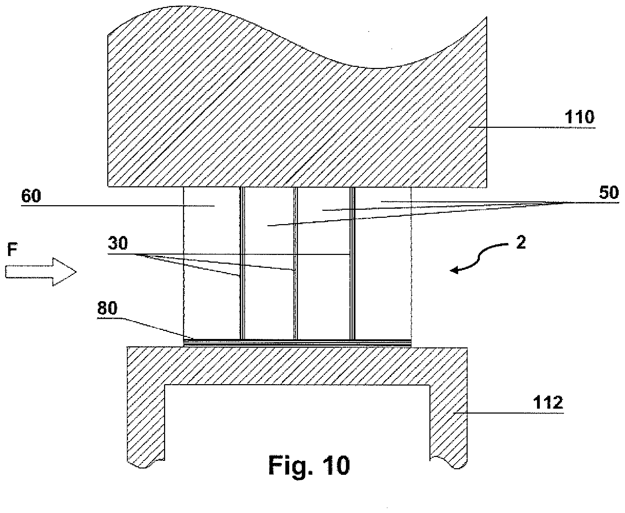

In einem weiteren alternativen Ausführungsbeispiel gemäß Fig. 10 ist eine Mehrzahl von ersten Schaumstoffstreifen 50, hier drei erste Schaumstoffstreifen 50, mit genau einem zweiten Schaumstoffstreifen 60 zu der Schaumstoff-Sperrschicht-Bahn 70 zusammengeführt, wobei jeweils genau eine Sperrschicht 30 auf jedem ersten Schaumstoffstreifen 50 angebracht ist und wobei der zweite Schaumstoffstreifen 60 an einem Rand der Schaumstoff-Sperrschicht-Bahn 70 angeordnet ist. Auch hier sind die Sperrschichten 30 zwischen aneinander grenzenden Schaumstoffstreifen 50, 60 angeordnet.

Ebenso ist es möglich, dass zwei Sperrschichten von zwei aneinandergrenzenden Schaumstoffstreifen 50, 50 oder 50, 60 unmittelbar nebeneinander angeordnet sind.

Prinzipiell können auf diese Weise Schaumstoff-Sperrschicht-Bahnen 70 beliebiger Ausprägung gestaltet werden, wobei sich Schaumstoffstreifen 50, 60 und Sperrschichten 30 vorzugsweise in Funktionsrichtung F abwechseln und jeweils ein Schaumstoffstreifen 50, 60 an einem Rand der Schaumstoff-Sperrschicht-Bahn 70 angeordnet ist.

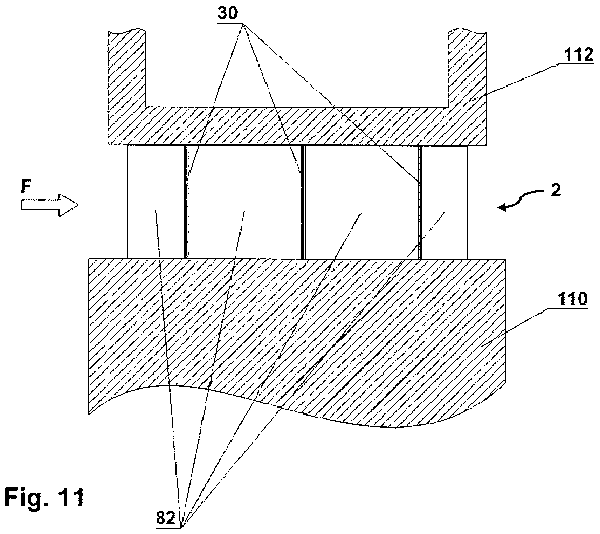

Das in Fig. 11 abgebildete Dichtband 2 umfasst in diesem Fall drei Sperrschichten 30 zwischen vier Schaumstoffstreifen 82, wobei die beiden äußeren Schaumstoffstreifen 82 nur halb so breit sind wie die beiden inneren Schaumstoffschichten 82.

Alle in Fig. 9 bis 11 dargestellten Varianten des Dichtbands 2 können mit beiden Varianten des erfindungsgemäßen Herstellungsverfahrens gemäß Anspruch 1 und Anspruch 6 hergestellt werden. Insofern können die Bezugszeichen 50, 60 in Fig. 9 und 10 gleichzeitig auch für Bezugszeichen 12 stehen. Alle vorgenannten Varianten der Schaumstoffstreifen 50, 60 kommen auch für die Schaumstoffstreifen 12 in Frage, insbesondere können verschiedene Schaumstoffstreifen 12 im selben Dichtband verschiedene Eigenschaften aufweisen.

Als "Sperrschicht" 30 wird im Rahmen dieser Anmeldung eine Schicht bezeichnet, die geeignet ist, den Durchtritt von Luft oder die Dampfdiffusion durch das Dichtband 2 zu reduzieren. Eine vollständige Sperrung gegenüber einem Durchtritt von Luft oder gegenüber Dampfdiffusion ist möglich, aber nicht zwangsläufig notwendig. Es kann zweckmäßig sein, wenn wenigstens eine Sperrschicht 30 feuchtevariabel ist derart, dass sie bei hoher Luftfeuchtigkeit diffusionsdichter ist als bei niedrigerer Luftfeuchtigkeit oder umgekehrt.

Hinsichtlich der für die Sperrschicht 30 einsetzbaren Materialien wird beispielsweise auf DE 10 2010 055 788 A1 oder auf EP 2 733 271 A1 verwiesen, deren Inhalt von dieser Anmeldung mit umfasst sein soll.

Besondere Bedeutung hat neben den Eigenschaften der Verringerung oder Verhinderung der Dampfdiffusion, dass jede Sperrschicht 30 dauerelastisch ist, so dass sie auch nach Lagerung der Dichtbandrolle 1 im komprimierten Zustand bei der Rückstellung des Dichtbands 2 dauerhaft elastisch bleibt und im Einbauzustand des Dichtbandes 2 in einer Fuge jederzeit dicht an den Fugenflanken anliegt.

## Patentansprüche

1. Verfahren zur Herstellung einer Dichtbandrolle (1) aus weichem, komprimiertem Schaumstoff mit mindestens einer in radialer Richtung verlaufenden Sperrschicht (30), die axial zwischen zwei Schichten aus Schaumstoff angeordnet ist, mit folgenden Schritten in der angegebenen Reihenfolge:
- Bereitstellen mindestens eines ersten Schaumstoffstreifens (50) aus weichem Schaumstoff, der an mindestens einer seiner Seitenflanken mit mindestens einem Folienstreifen (24), einem Klebebandstreifen und/oder einem klebstoffartigen flüssigen Medium versehen ist,
- Bereitstellen mindestens eines zweiten Schaumstoffstreifens (60) aus weichem Schaumstoff,
- Zusammenführen und Verbinden des mindestens einen ersten Schaumstoffstreifens (50) mit dem mindestens einen zweiten Schaumstoffstreifen (60) derart, dass eine Schaumstoff-Sperrschicht-Bahn (70) entsteht, bei der mindestens eine aus dem Folienstreifen (24), dem Klebebandstreifen und/oder dem klebstoffartigen flüssigen Medium hervorgegangene Sperrschicht (30) zwischen aneinandergrenzenden Schaumstoffstreifen (50, 60) angeordnet ist; und
- (i) Aufwickeln der Schaumstoff-Sperrschicht-Bahn (70) zu einer Dichtbandrolle (1), oder
- (ii) Aufwickeln der Schaumstoff-Sperrschicht-Bahn (70) zu einer Zwischenrolle (57) und Durchtrennen der Zwischenrolle (57) an einer oder an mehreren Stellen in axialer Richtung, um eine Mehrzahl von Dichtbandrollen (1) zu erzeugen, die weniger breit sind als die Zwischenrolle (57), oder
- (iii) Einbringen mindestens eines Schnitts (68) in die Schaumstoff-Sperrschicht-Bahn (70) in einer Längsrichtung der Schaumstoff-Sperrschicht-Bahn (70) zur Bildung von Schaumstoff-Sperrschicht-Streifen (69) und Aufwickeln der Schaumstoff-Sperrschicht-Streifen (69) zu einzelnen Dichtbandrollen (1).

2. Verfahren nach Anspruch 1, **dadurch gekennzeichnet, dass** das Bereitstellen des mindestens einen ersten Schaumstoffstreifens (50) folgende Schritte umfasst:
- Bereitstellen einer ersten Schaumstoffbahn (20) aus einem weichen Schaumstoff;
- Aufbringen einer Folienbahn (16), einer Klebebandbahn und/oder einer Schicht aus einem klebstoffartigen flüssigen Medium auf mindestens die Oberseite (21) oder die Unterseite (22) der Schaumstoffbahn (20) zur Erzeugung einer kaschierten Schaumstoffbahn (34); und
- Einbringen mindestens eines durchgängigen Schnitts (40) in die kaschierte Schaumstoffbahn (34) in einer Längsrichtung der kaschierten Schaumstoffbahn (34) zur Erzeugung einer Mehrzahl von ersten Schaumstoffstreifen (50), die jeweils an mindestens einer ihrer Seitenflanken mit mindestens einem Folienstreifen (24), einem Klebebandstreifen und/oder einem klebstoffartigen flüssigen Medium versehen sind.

3. Verfahren nach Anspruch 2, **dadurch gekennzeichnet, dass** das Bereitstellen der ersten Schaumstoffbahn (20) folgende Schritte aufweist:
- Bereitstellen einer ersten Rolle (10) mit der aufgewickelten ersten Schaumstoffbahn (20); und
- Abwickeln der ersten Schaumstoffbahn (20) von der ersten Rolle (10).

4. Verfahren nach Anspruch 2 oder 3, **dadurch gekennzeichnet, dass** die bereitgestellte erste Schaumstoffbahn (20) nicht imprägniert ist, und das Verfahren folgende Schritte nach dem Schritt des Zusammenführens und Verbindens der Schaumstoffstreifen (50, 60) aufweist:
- Tränken der Schaumstoff-Sperrschicht-Bahn (70) mit einem Imprägnat (94); und
- Trocknen der imprägnierten Schaumstoff-Sperrschicht-Bahn (70).

5. Verfahren nach einem der Ansprüche 2 bis 4, **dadurch gekennzeichnet, dass** das Einbringen des mindestens einen durchgängigen Schnitts (40) in die kaschierte Schaumstoffbahn (34) mittels mindestens eines Messers (38) oder mindestens einer Säge durchgeführt wird.

6. Verfahren zur Herstellung einer Dichtbandrolle (1) aus weichem, komprimiertem Schaumstoff mit mindestens einer in radialer Richtung verlaufenden Sperrschicht (30), die axial zwischen zwei Schichten aus Schaumstoff angeordnet ist, mit folgenden Schritten in der angegebenen Reihenfolge:
- Bereitstellen von mindestens zwei Schaumstoffstreifen (12) aus weichem Schaumstoff,
- Zusammenführen der mindestens zwei Schaumstoffstreifen (12) und gleichzeitig Einbringen eines Folienstreifens (24), eines Klebebandstreifens und/oder eines klebstoffartigen flüssigen Mediums in jeden Zwischenraum zwischen zwei benachbarten Schaumstoffstreifen (12);
- Verbinden aller Schaumstoffstreifen (12) derart, dass eine Schaumstoff-Sperrschicht-Bahn (70) entsteht, bei der mindestens eine aus dem Folienstreifen (24), dem Klebebandstreifen und/oder dem klebstoffartigen flüssigen Medium hervorgegangene Sperrschicht (30) zwischen aneinandergrenzenden Schaumstoffstreifen (12) angeordnet ist; und
- (i) Aufwickeln der Schaumstoff-Sperrschicht-Bahn (70) zu einer Dichtbandrolle (1), oder
- (ii) Aufwickeln der Schaumstoff-Sperrschicht-Bahn (70) zu einer Zwischenrolle (57) und Durchtrennen der Zwischenrolle (57) an einer oder an mehreren Stellen in axialer Richtung, um eine Mehrzahl von Dichtbandrollen (1) zu erzeugen, die weniger breit sind als die Zwischenrolle (57), oder
- (iii) Einbringen mindestens eines Schnitts (68) in die Schaumstoff-Sperrschicht-Bahn (70) in einer Längsrichtung der Schaumstoff-Sperrschicht-Bahn (70) zur Bildung von Schaumstoff-Sperrschicht-Streifen (69) und Aufwickeln der Schaumstoff-Sperrschicht-Streifen (69) zu einzelnen Dichtbandrollen (1).

7. Verfahren nach Anspruch 6, **dadurch gekennzeichnet, dass** das Bereitstellen der mindestens zwei Schaumstoffstreifen (12) folgende Schritte umfasst:
- Bereitstellen einer Rolle (55) mit einer aufgewickelten Schaumstoffbahn (58);
- Abwickeln der Schaumstoffbahn (58) von der Rolle (55); und
- Einbringen mindestens eines durchgängigen Schnitts (59) in die Schaumstoffbahn (58) in einer Längsrichtung der Schaumstoffbahn (58) zur Erzeugung einer Mehrzahl von Schaumstoffstreifen (12).

8. Verfahren nach Anspruch 6 oder 7, **dadurch gekennzeichnet, dass** das Einbringen jedes Folienstreifens (24) oder Klebebandstreifens in jeden Zwischenraum zwischen zwei benachbarten Schaumstoffstreifen (12) durch Abwickeln des Folienstreifens (24) oder Klebebandstreifens von einer Spule (18) oder Rolle und geeignete Führung des Folienstreifens (24) oder Klebebandstreifens erfolgt.

9. Verfahren nach Anspruch 6 oder 7, **dadurch gekennzeichnet, dass** das Einbringen des flüssigen klebstoffartigen Mediums in jeden Zwischenraum mittels einer Düse erfolgt.

10. Verfahren nach einem der vorangehenden Ansprüche, **dadurch gekennzeichnet, dass** das Verbinden der Schaumstoffstreifen (12, 50, 60) den Schritt aufweist, jeden Folienstreifen (24) mit einem oder beiden an den Folienstreifen (24) angrenzenden Schaumstoffstreifen (12, 50, 60) durch Laminierung zu verbinden.

11. Verfahren nach einem der vorangehenden Ansprüche, **dadurch gekennzeichnet, dass** das Verbinden aller Schaumstoffstreifen (12, 50, 60) den Schritt aufweist, das flüssige klebstoffartige Medium zu verfestigen.

12. Verfahren nach einem der vorangehenden Ansprüche, **dadurch gekennzeichnet, dass** das Verbinden aller Schaumstoffstreifen (12, 50, 60) den Schritt der Wärmeaufbringung umfasst.

13. Verfahren nach einem der vorangehenden Ansprüche, **dadurch gekennzeichnet, dass** das Verbinden aller Schaumstoffstreifen (12, 50, 60) den Schritt umfasst, die Schaumstoffstreifen (12, 50, 60) aneinander zu drücken.

14. Verfahren nach einem der vorangehenden Ansprüche, bezogen auf Alternative (ii), **dadurch gekennzeichnet, dass** das Durchtrennen der Zwischenrolle (57) mittels Sägen (62) durchgeführt wird.

15. Verfahren nach einem der vorangehenden Ansprüche, **dadurch gekennzeichnet, dass** eine beidseitig klebende Klebeschicht (80) auf alle Schaumstoffstreifen (12, 50, 60) der Schaumstoff-Sperrschicht-Bahn (70) auf einer Fläche, die senkrecht zu der mindestens einen Sperrschicht (30) verläuft, aufgebracht wird, wobei die Klebeschicht (80) auf ihrer den Schaumstoffstreifen (12, 50, 60) abgewandten Seite mit einer Abziehfolie (81) kaschiert ist.

## Claims

1. Method for producing a sealing tape roll (1) consisting of soft, compressed foam having at least one barrier layer (30) which extends in the radial direction and which is arranged axially between two layers of foam, comprising the following steps in the order specified:
- providing at least one first foam strip (50) consisting of soft foam which is provided with at least one film strip (24), an adhesive tape strip and/or an adhesive-like liquid medium on at least one of its lateral flanks,
- providing at least one second foam strip (60) consisting of soft foam,
- combining and connecting the at least one first foam strip (50) with and to the at least one second foam strip (60) in such a way that a foam barrier-layer web (70) results in which at least one barrier layer (30) which has resulted from the film strip (24), the adhesive tape strip and/or the adhesive-like liquid medium is arranged between foam strips (50, 60) which are adjacent to one another; and
- (i) winding up the foam barrier-layer web (70) to form a sealing tape roll (1), or
- (ii) winding up the foam barrier-layer web (70) to form an intermediate roll (57) and severing the intermediate roll (57) at one or more points in the axial direction in order to create a plurality of sealing tape rolls (1) which are less wide than the intermediate roll (57), or
- (iii) making at least one cut (68) in the foam barrier-layer web (70) in a longitudinal direction of the foam barrier-layer web (70) to form foam barrier-layer strips (69) and winding up the foam barrier-layer strips (69) to form individual sealing tape rolls (1) .

2. Method according to claim 1, **characterized in that** the provision of the at least one first foam strip (50) comprises the following steps:
- providing a first foam web (20) consisting of a soft foam;
- applying a film web (16) an adhesive tape web and/or a layer consisting of an adhesive-like liquid medium to at least the upper side (21) or the underside (22) of the foam web (20) to produce a laminated foam web (34); and
- making at least one continuous cut (40) in the laminated foam web (34) in a longitudinal direction of the laminated foam web (34) to produce a plurality of first foam strips (50) which are each provided on at least one of their lateral flanks with at least one film strip (24), an adhesive tape strip and/or an adhesive-like liquid medium.

3. Method according to Claim 2, **characterized in that** the provision of the first foam web (20) comprises the following steps:
- providing a first roll (10) having the wound-up first foam web (20); and
- unwinding the first foam web (20) from the first roll (10).

4. Method according to Claim 2 or 3, **characterized in that** the first foam web (20) provided is not impregnated, and the method comprises the following steps after the step of combining and connecting the foam strips (50, 60) :
- impregnating the foam barrier-layer web (70) with an impregnating substance (94); and
- drying the impregnated foam barrier-layer web (70).

5. Method according to one of Claims 2 to 4, **characterized in that** the making of the at least one continuous cut (40) in the laminated foam web (34) is carried out by means of at least one knife (38) or at least one saw.

6. Method for producing a sealing tape roll (1) consisting of soft, compressed foam having at least one barrier layer (30) which extends in the radial direction and which is arranged axially between two layers of foam, comprising the following steps in the order specified:
- providing at least two foam strips (12) consisting of soft foam,
- combining the at least two foam strips (12) and simultaneously introducing a film strip (24), an adhesive tape strip and/or an adhesive-like liquid medium into each interspace between two adjacent foam strips (12);
connecting all of the foam strips (12) in such a manner that a foam barrier-layer web (70) results in which at least one barrier layer (30) which has resulted from the film strip (24), the adhesive tape strip and/or the adhesive-like liquid medium is arranged between foam strips (12) which are adjacent to one another; and
- (i) winding up the foam barrier-layer web (70) to form a sealing tape roll (1), or
- (ii) winding up the foam barrier-layer web (70) to form an intermediate roll (57) and severing the intermediate roll (57) at one or more points in the axial direction in order to create a plurality of sealing tape rolls (1) which are less wide than the intermediate roll (57), or
(iii) making at least one cut (68) in the foam barrier-layer web (70) in a longitudinal direction of the foam barrier-layer web (70) to form foam barrier-layer strips (69) and winding up the foam barrier-layer strips (69) to form individual sealing tape rolls (1).

7. Method according to Claim 6, **characterized in that** the provision of the at least two foam strips (12) comprises the following steps:
- providing a roll (55) having a wound-up foam web (58) ;
- unwinding the foam web (58) from the roll (55); and
- making at least one continuous cut (59) in the foam web (58) in a longitudinal direction of the foam web (58) to produce a plurality of foam strips (12).

8. Method according to Claim 6 or 7, **characterized in that** each film strip (24) or adhesive tape strip is introduced into each interspace between two adjacent foam strips (12) by unwinding the film strip (24) or adhesive tape strip from a reel (18) or roll and suitably guiding the film strip (24) or adhesive tape strip.

9. Method according to Claim 6 or 7, **characterized in that** the liquid adhesive-like medium is introduced into each interspace by means of a nozzle.

10. Method according to one of the preceding claims, **characterized in that** the connection of the foam strips (12, 50, 60) comprises the step of connecting each film strip (24) to one or both foam strips (12, 50, 60) adjoining the film strip (24) by lamination.

11. Method according to one of the preceding claims, **characterized in that** the connection of all of the foam strips (12, 50, 60) comprises the step of curing the liquid adhesive-like medium.

12. Method according to one of the preceding claims, **characterized in that** the connection of all of the foam strips (12, 50, 60) comprises the step of heat application.

13. Method according to one of the preceding claims, **characterized in that** the connection of all of the foam strips (12, 50, 60) comprises the step of pressing the foam strips (12, 50, 60) against one another.

14. Method according to one of the preceding claims, based on alternative (ii), **characterized in that** the intermediate roll (57) is severed by means of saws (62) .

15. Method according to one of the preceding claims, **characterized in that** an adhesive layer (80) which adheres on both sides is applied to all of the foam strips (12, 50, 60) of the foam barrier-layer web (70) on a surface which extends perpendicular to the at least one barrier layer (30), wherein the adhesive layer (80) is laminated on its side facing away from the foam strips (12, 50, 60) with a peel-off film (81).

## Revendications

1. Procédé de fabrication d'un rouleau de ruban étanche (1) en mousse comprimée souple, comprenant au moins une couche de blocage (30), s'étendant en direction radiale, qui est disposée axialement entre deux couches de mousse, comportant des étapes suivantes dans l'ordre indiqué :
- mettre à disposition au moins une première bande de mousse (50) en mousse souple, qui est pourvue, sur au moins l'un de ses flancs latéraux, d'au moins une bande de film (24), une bande de ruban adhésif et/ou un milieu fluide du type colle,
- mettre à disposition une seconde bande de mousse (60) en mousse souple,
- rapprocher et réunir ladite au moins une première bande de mousse (50) avec ladite au moins une seconde bande de mousse (60) d'une façon telle qu'il se forme une nappe mousse-couche de blocage (70), dans laquelle au moins une couche de blocage (30) provenant de la bande de film (24), la bande de ruban adhésif et/ou le milieu fluide du type colle est située entre des bandes de mousse (50, 60) adjacentes ; et
- (i) enrouler la nappe mousse-couche de blocage (70) en un rouleau de ruban étanche (1), ou
- (ii) enrouler la nappe mousse-couche de blocage (70) en un rouleau intermédiaire (57) et découper le rouleau intermédiaire (57) en un ou plusieurs emplacements en direction axiale, pour produire de multiples rouleaux de ruban étanche (1), qui sont moins larges que le rouleau intermédiaire (57), ou
- (iii) ménager au moins une entaille (68) dans la nappe mousse-couche de blocage (70) dans une direction longitudinale de la nappe mousse-couche de blocage (70) pour la formation de bandes mousse-couche de blocage (69) et enrouler les bandes de mousse-couche de blocage (69) en rouleaux de ruban étanche (1) individuels.

2. Procédé suivant la revendication 1, **caractérisé en ce que** la mise à disposition de ladite au moins une première bande de mousse (50) comporte des étapes suivantes :
- mettre à disposition une nappe de mousse (20) en une mousse souple ;
- appliquer une nappe de film (16), une nappe de ruban adhésif et/ou une couche d'un milieu fluide du type colle sur au moins la face supérieure (21) ou la face inférieure (22) de la nappe de mousse (20) pour produire une nappe de mousse doublée (34) ;
- ménager au moins une entaille traversante (40) dans la nappe de mousse doublée (34) dans une direction longitudinale de la nappe de mousse doublée (34) pour la formation de multiples premières bandes de mousse (50) qui sont pourvues chacune, sur au moins l'un de ses flancs latéraux, d'au moins une bande de film (24), une bande de ruban adhésif et/ou un milieu fluide du type colle.

3. Procédé suivant la revendication 2, **caractérisé en ce que** la mise à disposition de la première nappe de mousse (20) comporte des étapes suivantes :
- mettre à disposition un premier rouleau (10) comportant la première nappe de mousse (20) enroulée ; et
- dérouler du premier rouleau (10) la première nappe de mousse (20).

4. Procédé suivant la revendication 2 ou 3, **caractérisé en ce que** la première nappe de mousse (20) mise à disposition n'est pas imprégnée, et le procédé comporte des étapes suivantes après l'étape de rapprochement et réunion des bandes de mousse (50, 60) :
- imprégner d'un produit d'imprégnation (94) la nappe mousse-couche de blocage (70) ; et
- sécher la nappe mousse-couche de blocage (70) imprégnée.

5. Procédé suivant l'une des revendications 2 à 4, **caractérisé en ce que** l'étape consistant à ménager ladite au moins une entaille traversante (40) dans la nappe de mousse doublée (34) est effectuée au moyen d'un couteau (38) ou d'au moins une scie.

6. Procédé de fabrication d'un rouleau de ruban étanche (1) en mousse comprimée souple, comprenant au moins une couche de blocage (30), s'étendant en direction radiale, qui est disposée axialement entre deux couches de mousse, comportant des étapes suivantes dans l'ordre indiqué :
- mettre à disposition au moins deux bandes de mousse (12) en mousse souple,
- rapprocher lesdites au moins deux bandes de mousse (12) et mettre en place simultanément une bande de film (24), une bande de ruban adhésif et/ou un milieu fluide du type colle dans chaque espace intermédiaire entre deux bandes de mousse (12) voisines ;
- réunir toutes les bandes de mousse (12) d'une façon telle qu'il se forme une nappe mousse-couche de blocage (70), dans laquelle au moins une couche de blocage (30) provenant de la bande de film (24), la bande de ruban adhésifs et/ou le milieu fluide du type colle est située entre des bandes de mousse (12) adjacentes ; et
- (i) enrouler la nappe mousse-couche de blocage (70) en un rouleau de ruban étanche (1), ou
- (ii) enrouler la nappe mousse-couche de blocage (70) en un rouleau intermédiaire (57) et découper le rouleau intermédiaire (57) en un ou plusieurs emplacements en direction axiale, pour produire de multiples rouleaux de ruban étanche (1), qui sont moins larges que le rouleau intermédiaire (57), ou
- (iii) ménager au moins une entaille (68) dans la nappe mousse-couche de blocage (70) dans une direction longitudinale de la nappe mousse-couche de blocage (70) pour la formation de bandes mousse-couche de blocage (69) et enrouler les bandes de mousse-couche de blocage (69) en rouleaux de ruban étanche (1) individuels.

7. Procédé suivant la revendication 6, **caractérisé en ce que** la mise à disposition desdites au moins deux bandes de mousse (12) comporte des étapes suivantes :
- mettre à disposition un rouleau (55) comportant une nappe de mousse (58) enroulée ;
- dérouler du rouleau (55) la nappe de mousse (58) ; et
- ménager au moins une entaille traversante (59) dans la nappe de mousse (58) dans une direction longitudinale de la nappe de mousse (58) pour la formation de multiples bandes de mousse (12).

8. Procédé suivant la revendication 6 ou 7, **caractérisé en ce que** la mise en place de chaque bande de film (24) ou bande de ruban adhésif dans chaque espace intermédiaire entre deux bandes de mousse (12) voisines est effectuée en déroulant la bande de film (24) ou bande de ruban adhésif à partir d'une bobine (18) ou rouleau et en guidant de manière appropriée la bande de film (24) ou bande de ruban adhésif.

9. Procédé suivant la revendication 6 ou 7, **caractérisé en ce que** la mise en place du milieu fluide du type colle dans chaque espace intermédiaire a lieu au moyen d'une buse.

10. Procédé suivant l'une des revendications précédentes, **caractérisé en ce que** la réunion des bandes de mousse (12, 50, 60) comporte l'étape consistant à réunir, par application couche sur couche, chaque bande de film (24) avec une ou deux bandes de mousse (12, 50, 60) adjacentes à la bande de film (24).

11. Procédé suivant l'une des revendications précédentes, **caractérisé en ce que** la réunion de toutes les bandes de mousse (12, 50, 60) comporte l'étape consistant à faire durcir le milieu fluide de type colle.

12. Procédé suivant l'une des revendications précédentes, **caractérisé en ce que** la réunion de toutes les bandes de mousse (12, 50, 60) comporte l'étape d'apport de chaleur.

13. Procédé suivant l'une des revendications précédentes, **caractérisé en ce que** la réunion de toutes les bandes de mousse (12, 50, 60) comporte l'étape consistant à presser les bandes de mousse (12, 50, 60) l'une contre l'autre.

14. Procédé suivant l'une des revendications précédentes, se référant à la variante (ii), **caractérisé en ce que** le découpage du rouleau intermédiaire (57) est effectué au moyen de scies (62).

15. Procédé suivant l'une des revendications précédentes, **caractérisé en ce qu'**une couche adhésive (80) collant sur les deux faces est appliquée sur toutes les bandes de mousse (12, 50, 60) de la nappe mousse-couche de blocage (70), sur une surface qui s'étend perpendiculairement à ladite au moins une couche de blocage (30), la couche adhésive (80) étant doublée, sur sa face tournée à l'opposé des bandes de mousse (12, 50, 60), d'une bande de pelage (81).
